# EUROPÄISCHE PATENTANMELDUNG

(11) **EP 0 794 633 A2**
(43) Veröffentlichungstag der Anmeldung: **10.09.1997**
(21) Anmeldenummer: 97103746.0
(22) Anmeldetag: 06.03.1997
(51) Int. Cl.: H04L 5/14

(54) **Übertragungssystem zur Übertragung von hochbitratigen Digitalsignalen im Frequenz-Getrenntlageverfahren über symmetrische Cu-Doppelader-Leitungen**

(30) Priorität: 06.03.1996 DE 19608724
(71) Anmelder: SIEMENS AKTIENGESELLSCHAFT, 80333 München (DE)
(72) Erfinder: Wildmoser, Hans, Dipl.-Ing., 85276 Pfaffenhofen (DE)

(57) **Zusammenfassung**

Den beiden Übertragungsrichtungen sind zwei feste Frequenzbänder dergestalt zugeordnet, daß für die Signalübertragung downstream zum Teilnehmer hin ein von etwa 4,2 MHz bis etwa 8,7 MHz reichendes Downstream-Frequenzband und für die Signalübertragung upstream vom Teilnehmer weg ein etwa von 0,3 MHz bis 1,8 MHz reichendes Upstream-Frequenzband vorgesehen ist.

## Beschreibung

Im Teilnehmeranschlußbereich eines Telekommunikationsnetzes können für den Anschluß der einzelnen Teilnehmerstellen unterschiedliche Übertragungsmedien wie Cu-Zweidrahtleitung (Cu-Doppelader-Leitung), Koaxialkabel, Glasfaser (oder auch Funk) vorgesehen sein, wobei in bestehenden Telekommunikationsnetzen Cu-Doppelader-Leitungen eine beherrschende Rolle spielen. Der Trend zu höheren Übertragungsraten führt dabei ggf. zwar zu einer Heranführung von Glasfaserstrecken bis zu einem teilnehmernahen Schaltpunkt im Teilnehmeranschlußbereich, dem sog. Kabelverzweiger (Fiber to the Curb); für die restliche Strecke zwischen Kabelverzweiger und Teilnehmerstrecke verbleibt es in aller Regel jedoch bei der hier installierten Cu-Doppelader-Leitung. Die so noch mit Cu-Zweidrahtleitungen zu überbrückende Distanz beträgt in Deutschland in 90 % aller Fälle weniger als 500 m; in den USA ist die entsprechende Distanz etwa 2- bis 3mal grösser.

Für solche Cu-Doppelader-Leitungen werden gegenwärtig in den Standardisierungsgremien Übertragungssysteme zur Übertragung von Bitraten in der Grössenordnung von etwa 12 bis 50 Mbit/s diskutiert, wobei sowohl symmetrische (gleiche Bitraten in beiden Übertragungsrichtungen) als auch asymmetrische Systeme (hohe Bitrate downstream zum Teilnehmer; niedrigere Bitrate upstream im Rückkanal) betrachtet werden (ITG-Fachtagung "Zukunft der Kommunikationsnetze", Köln 14.12.1995, Seiten 87 ... 96; ntz (1996)2, 20 ... 27).

So hat das ATM-Forum Verfahren spezifiziert (ATM Forum User-Network Interface, Version 3.1 (UNI 3.1) Specification, Draft of July 21, 1994, Seiten II-9 ... II-15), die in Hin- und Rückrichtung im gleichen Frequenzband übertragen und daher auf getrennte Leitungen angewiesen sind, um eine aufwendige Echokompensation zu vermeiden. Zusätzlich ist bei diesen Verfahren die Reichweite begrenzt, weil besonders intensive Störungen durch Nahnebensprechen zu verkraften sind. Ein weiterer Nachteil ist, daß das Sendesignal Spektralanteile bis in den Gleichstrombereich aufweist und daher ein konventioneller Telefondienst (POTS) oder ein ISDN-Basic-Access auf der gleichen Leitung nicht möglich ist.

DAVIC hat demgegenüber Frequenzgetrenntlageverfahren spezifiziert (DAVIC 1.0 Specification Part 08, Seiten 23 und 30), die aber nur asymmetrische Dienste bieten, d.h. in upstream-Richtung vom Teilnehmer zur Vermittlung sind nur Digitalsignale mit niedrigeren Bitraten als in Richtung zum Teilnehmer übertragbar. Die Frequenzbänder sind dabei so gewählt, daß ein Mischen unterschiedlicher Dienste nicht möglich ist, weil sonst Nahnebensprechstörungen wirksam werden. Außerdem bietet dieses Verfahren über größere Entfernungen keine hochbitratigen Dienste in upstream-Richtung vom Teilnehmer zur Vermittlung, weil der hierfür nötige Frequenzbereich nicht mehr zur Verfügung steht.

Beim ETSI-Meeting in Helsinki wurde ein Frequenzgetrenntlageverfahren vorgeschlagen (ETSI TM3, Helsinki 25.-29.Sept.1995, Working Doc. No. 34), das für Leitungslängen von etwa 500 m einen guten Kompromiß bezüglich einer Nutzung mit asymmetrischen und symmetrischen Diensten ergibt.

Die Erfindung stellt sich nun die Aufgabe, ein System zur Übertragung von Digitalsignalen hoher Bitraten über symmetrische Cu-Doppelader-Leitungen auch in einem grösseren Reichweitenbereich anzugeben.

Die Erfindung betrifft ein Übertragungssystem zur Übertragung von hochbitratigen Digitalsignalen im Frequenzgetrenntlageverfahren über symmetrische Cu-Doppelader-Leitungen, insbesondere im Teilnehmeranschlußbereich von Fernsprechnetzen; dieses Übertragungssystem ist erfindungsgemäß dadurch gekennzeichnet, daß den beiden Übertragungsrichtungen jeweils ein festes Frequenzband dergestalt zugeordnet ist, daß für die Signalübertragung downstream zum Teilnehmer hin ein größenordnungsmäßig etwa von 4,2 MHz bis 8,7 MHz, insbesondere von etwa 4,212 MHz bis etwa 8,748 MHz, reichendes Downstream-Frequenzband und für die Signalübertragung upstream vom Teilnehmer weg ein größenordnungsmäßig etwa von 0,3 MHz bis 1,8 MHz, insbesondere von etwa 0,324 MHz bis 1,836 MHz, reichendes Upstream-Frequenzband vorgesehen ist.

Indem den beiden Übertragungsrichtungen erfindungsgemäß zwei feste Frequenzbänder dergestalt zugeordnet sind, daß ein mit seiner oberen Frequenzgrenze etwa bei 8,7 MHz und mit seiner unteren Frequenzgrenze innerhalb des - gemäß dem Vorschlag in ETSI TM3 Working Document No.34 Helsinki 1995 bis etwa 3,9 MHz reichenden - Downstream-Frequenzbandes für Leitungslängen bis zu 500 m liegendes Downstream-Frequenzband für die Signalübertragung downstream zum Teilnehmer hin und ein von diesem beabstandetes, mit seiner oberen Frequenzgrenze unterhalb des untersten Amateurfunkbandes und mit seiner unteren Frequenzgrenze oberhalb des ISDN-Basic-Access-Frequenzbandes liegendes Upstream-Frequenzband für die Signalübertragung upstream vom Teilnehmer weg vorgesehen sind, ermöglicht die Erfindung mit der Vorgabe solcherart voneinander abgesetzter fester Frequenzbänder eine Breitbandsignalübertragung über Leitungslängen auch von mehr als 500 m sowohl für asymmetrische als auch für symmetrische Dienste; dabei können je nach der gewünschten Bitrate unterschiedliche Leitungscodes zur Anwendung kommen, indem jeweils nach Maßgabe der für die jeweilige Übertragungsrichtung vorgegebenen Bitrate Leitungscodierungsverfahren gewählt werden, die mit zumindest im wesentlichen mit den genannten Frequenzbändern sich deckenden Frequenzspektren verbunden sind.

Durch Beschränkung des Downstream-Frequenzbandes auf Frequenzen unter etwa 8,75 MHz kann eine Reichweite bis zu 1,2 km erzielt werden; gegenseitige Beeinflussungen zwischen Amateurfunkband und Upstream-Frequenzband sind praktisch vermieden.

Es ist ein Mischen unterschiedlicher Dienste, d.h. ein richtungsindividuelles Zusammenfassen von Signalen asymmetrischer und symmetrischer Dienste, möglich, ohne daß es zu störenden Beeinträchtigungen durch Nahnebensprechen kommt. Für die Richtungstrennung genügt eine relativ einfache Filterung.

Auf der symmetrischen Cu-Doppelader-Leitung ist zugleich konventioneller Telefondienst (POTS - Plain Old Telephone Service) oder ISDN Basic Access möglich.

Die Frequenzbänder sind so gewählt, daß zur Leitungscodierung der zu übertragenden hochbitratigen Digitalsignale Kodierungsverfahren angewendet werden können, die eine relativ einfache und verlustleistungsarme Implementierung ermöglichen. Dadurch, daß unabhängig von der Bitrate immer das gleiche Frequenzband genutzt wird, können gleiche Shapingfilter verwendet werden.

Wählt man für die Downstream-Übertragung bei einer Bitrate von beispielsweise 6,48 Mbit/s als Kodierungsverfahren ein QPSK-Verfahren bei einer dem Doppelten der Symbolfrequenz fₛ entsprechenden Trägerfrequenz f_{cd} = 6,48 MHz, so wird bei einem roll-off r = 0,4 ein von 4,212 MHz bis 8,748 MHz reichendes Frequenzband belegt. Im gleichen Frequenzband läßt sich mit einem 16-QAM-Kodierungsverfahren die doppelte Bitrate von 12,96 Mbit/s übertragen.

Für die Upstream-Übertragung wird bei einer Bitrate von beispielsweise 2,16 Mbit/s mit wiederum einem QPSK-Verfahren und roll-off r = 0,4, aber einer der Symbolfrequenz fₛ entsprechenden Trägerfrequenz f_{Tu} = 1,08 MHz ein von 0,324 MHz bis 1,836 MHz reichendes Frequenzband belegt. Im gleichen Frequenzband läßt sich mit einem 64-QAM-Kodierungsverfahren die dreifache Bitrate von 6,48 Mbit/s übertragen.

Das Übertragungssystem ermöglicht damit eine für zukünftige Multimedia-Anwendungen interessante Übertragung hochbitratiger Digitalsignale (mit Bitraten von mehr als 2 Mbit/s) über die vorhandenen Kupfer-Zweidrahtleitungen der Fernsprechnetzbetreiber.

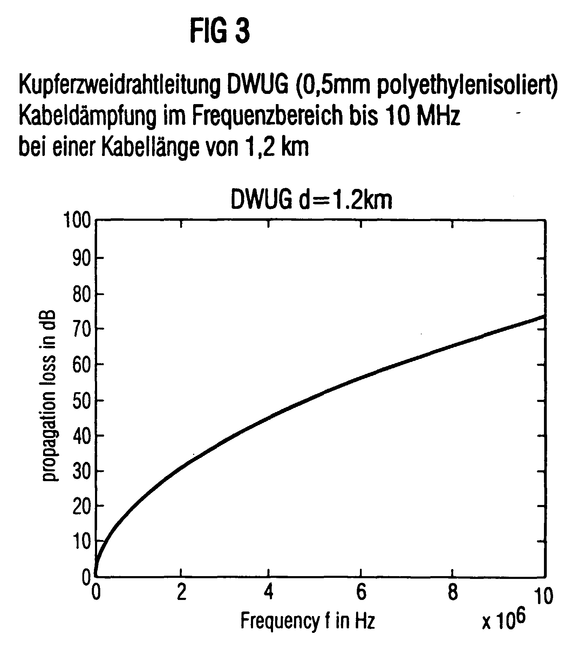

Eine Systemberechnung des Übertragungssystems auf der Basis des in FIG 1 skizzierten Kanalmodells bei einer Leitungslänge von 1,2 km hat zu dem in FIG 2 skizzierten Ergebnis geführt. Die Leitungsdämpfung im Frequenzbereich bis 10 MHz bei einer Leitungslänge von 1,2 km (0,5 mm polyethylenisolierte Kupferzweidrahtleitung DWUG) zeigt das in FIG 3 wiedergegebene Diagramm.

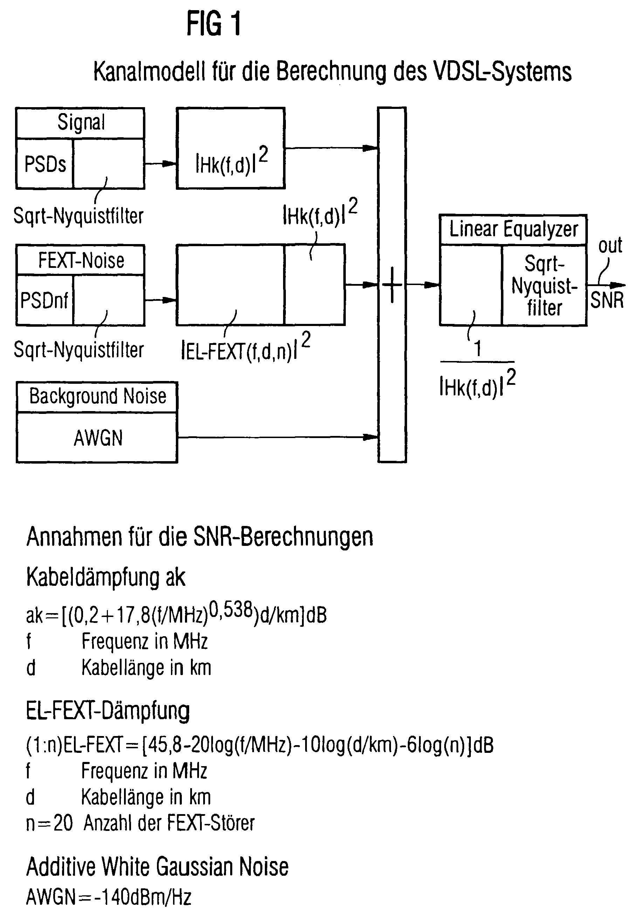

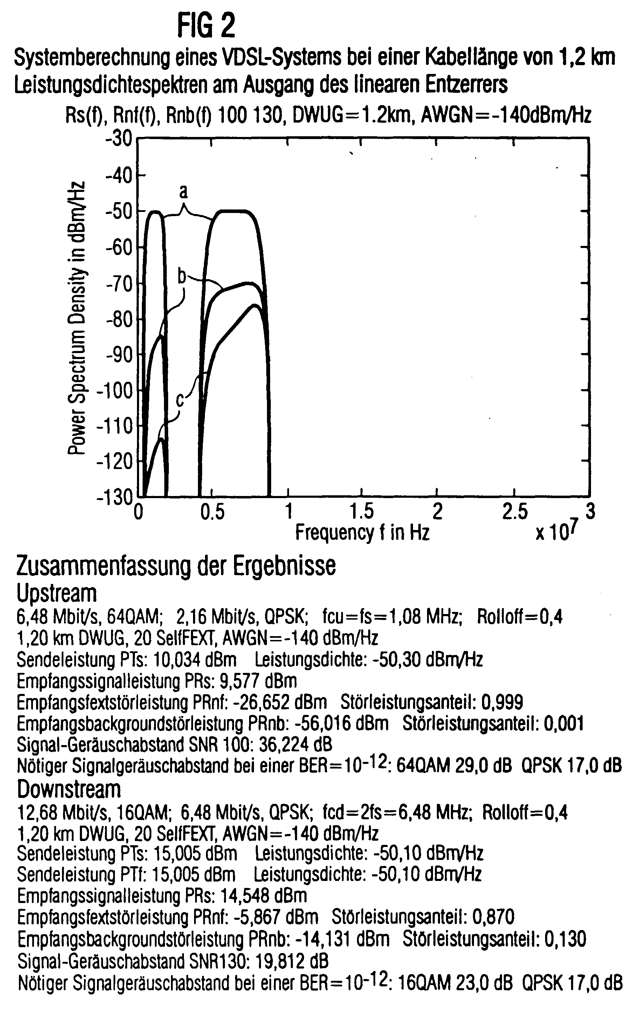

Dabei sind in FIG 2 die Signal/Geräusch-Verhältnisse (SNR) am Ausgang out (in FIG 1) eines linearen Entzerrers dargestellt. Die Kurven a zeigen dabei die am Ausgang out auftretende Empfangs-Nutzignalleistungsdichte; mit den Kurven b ist die Empfangs-FEXT-Störleistungsdichte dargestellt und mit den Kurven c die Empfangs-Background-Störleistungsdichte. Wie aus FIG 2 ersichtlich ist, kann in den beiden erfindungsgemäß vorgesehenen festen Frequenzbändern im Beispiel von 0,324 MHz bis 1,836 MHz und von 4,212 MHz bis 8,748 MHz beispielsweise ein symmetrischer Breitbanddienst mit einer downstream-Bitrate von 6,48 MBit/s bei einer dem Doppelten der Symbolfrequenz fₛ entsprechenden Trägerfrequenz f_{cd} = 6,48 MHz und QPSK-Codierung sowie einer gleich grossen upstream-Bitrate bei einer der Symbolfrequenz fₛ entsprechenden Trägerfrequenz f_{cu} = 1,08 MHz und 64QAM-Codierung etabliert werden oder beispielsweise ein asymmetrischer Breitbanddienst mit einer downstream-Bitrate von 12,68 MBit/s bei 16QAM-Codierung und einer upstream-Bitrate von 2,16 Mbit/s bei QPSK-Codierung.

Abschliessend sei noch bemerkt, daß die oben angegebenen Frequenzgrenzen im Verlauf einer Standardisierung noch Verschiebungen bzw. Präzisierungen erfahren können, ohne daß damit der Rahmen der Erfindung überschritten wird.

## Patentansprüche

1. Übertragungssystem zur Übertragung von hochbitratigen Digitalsignalen im Frequenzgetrenntlageverfahren über symmetrische Cu-Doppelader-Leitungen im Teilnehmeranschlußbereich insbesondere von Fernsprechnetzen,
**dadurch gekennzeichnet**
daß den beiden Übertragungsrichtungen jeweils ein festes Frequenzband dergestalt zugeordnet ist, daß für die Signalübertragung downstream zum Teilnehmer hin ein größenordnungsmäßig etwa von 4,2 MHz bis 8,7 MHz reichendes Downstream-Frequenzband und für die Signalübertragung upstream vom Teilnehmer weg ein größenordnungsmäßig etwa von 0,3 MHz bis 1,8 MHz reichendes Upstream-Frequenzband vorgesehen ist.

2. Übertragungssystem zur Übertragung von hochbitratigen Digitalsignalen im Frequenzgetrenntlageverfahren über symmetrische Cu-Doppelader-Leitungen im Teilnehmeranschlußbereich insbesondere von Fernsprechnetzen,
**dadurch gekennzeichnet**
daß den beiden Übertragungsrichtungen zwei feste Frequenzbänder dergestalt zugeordnet sind, daß ein mit seiner oberen Frequenzgrenze etwa bei 8,7 MHz und mit seiner unteren Frequenzgrenze innerhalb des - gemäß dem Vorschlag in ETSI TM3 Working Document No.34 Helsinki 1995 bis etwa 3,9 MHz reichenden - Downstream-Frequenzbandes für Leitungslängen bis zu 500 m liegendes Downstream-Frequenzband für die Signalübertragung downstream zum Teilnehmer hin und ein von diesem beabstandetes, mit seiner oberen Frequenzgrenze unterhalb des untersten Amateurfunkbandes und mit seiner unteren Frequenzgrenze oberhalb des ISDN-Basic-Access-Frequenzbandes liegendes Upstream-Frequenzband für die Signalübertragung upstream vom Teilnehmer weg vorgesehen sind.

3. Übertragungssystem nach Anspruch 1 oder 2,
**dadurch gekennzeichnet**
daß für die Signalübertragung downstream zum Teilnehmer hin ein von etwa 4,212 MHz bis etwa 8,748 MHz reichendes Downstream-Frequenzband und für die Signalübertragung upstream vom Teilnehmer weg ein von etwa 0,324 MHz bis 1,836 MHz reichendes Upstream-Frequenzband vorgesehen ist.

4. Übertragungssystem nach einem der Ansprüche 1 bis 3,
**gekennzeichnet durch**
eine standardisierungsbedingte Verschiebung der oberen und/oder unteren Frequenzgrenze des Downstream- und/oder des Upstream-Frequenzbandes.

5. Übertragungssystem nach einem der vorhergehenden Ansprüche,
**gekennzeichnet durch**
nach Maßgabe der für die jeweilige Übertragungsrichtung vorgegebenen Bitrate gewählte, mit zumindest im wesentlichen mit den genannten Frequenzbändern sich deckenden Frequenzspektren verbundene Leitungscodes.
